# EUROPÄISCHE PATENTSCHRIFT

(11) **EP 0 666 120 B1**
(45) Veröffentlichungstag und Bekanntmachung des Hinweises auf die Patenterteilung: **20.05.1998**
(21) Anmeldenummer: 95101234.3
(22) Anmeldetag: 30.01.1995
(51) Int. Cl.: B09B 1/00

(54) **Verfahren zur Gewinnung von Deponieraum für fliessfähige Abfallstoffe**
Method for gaining place in a dump for fluid waste
Procédé pour gagner de la place dans une décharge pour déchets fluides

(30) Priorität: 04.02.1994 DE 4403514
(43) Veröffentlichungstag der Anmeldung: 09.08.1995
(73) Patentinhaber: KELLER GRUNDBAU GmbH, D-63067 Offenbach (DE)
(72) Erfinder: Sondermann, Wolfgang Dr., D-29664 Walsrode (DE); Berg, Joachim Dipl.-Ing., D-63150 Heusenstamm (DE)
(74) Vertreter: Zeitler & Dickel

(56) Entgegenhaltungen:
- EP-A- 0 216 751
- EP-A- 0 441 169
- WO-A-92/04137
- DE-C- 4 234 112
- US-A- 3 675 428
- US-A- 5 226 749

## Beschreibung

Die Erfindung betrifft ein Verfahren zur Gewinnung von Deponieraum für fließfähige Abfallstoffe, insbesondere für Klärschlamm, gemäß dem Oberbegriff des Anspruchs 1.

Fließfähige Abfallstoffe, wie Klärschlamm, werden üblicherweise in speziellen Deponien gelagert. Hierbei besteht jedoch das Problem, daß aufgrund der großen Mengen von anfallendem Klärschlamm entsprechend große Deponieräume erforderlich sind, was grundsätzlich schon aus Wirtschaftlichkeitserwägungen heraus unerwünscht ist. Darüber hinaus stellen derartige Deponien eine erhebliche Umweltbelastung dar, wobei insbesondere die Luft- und Bodenqualität im Bereich der Deponien beeinträchtigt wird. Aus diesen Gründen bestehen erhebliche Probleme, neue Deponien bzw. eine Erweiterung bestehender Deponien bei der Bevölkerung durchzusetzen und durch die Behörden genehmigt zu bekommen. Der zur Verfügung stehende Deponieraum für fließfähige Abfallstoffe, wie Klärschlamm, muß daher als äußerst knapp angesehen werden.

Ein bekanntes Verfahren, Klärschlamm zu entsorgen, besteht darin, den Klärschlamm als "Düngemittel" auf Felder auszubringen. Auch dieses Verfahren trifft jedoch auf zunehmenden Widerstand, da Klärschlamm häufig Schwermetalle und andere schädigende Bestandteile enthält.

Bei einem bekannten Verfahren der gattungsgemäßen Art (WO 92/04137) werden Injektionslanzen bis zu einer vorbestimmten Tiefe in den Deponiekörper eingebracht, worauf von der Spitze dieser Lanzen aus weiteres Abfallmaterial unter hohem Druck eingepreßt wird. Hierbei werden Abfallstoffe von ganz bestimmter Konsistenz verwendet, die durch besondere Zusatzstoffe erzielt wird. Je nach Konsistenz der Abfallstoffe und Porengröße innerhalb des Deponiekörpers soll hierdurch von der Spitze der Injektionslanze aus eine Permeation des umgebenden Deponiekörpers erfolgen, d.h. eine Auffüllung der Poren ohne Verdrängung des umgebenden Müllmaterials oder eine Verdrängung und damit einhergehende Verdichtung des Deponiekörpers. Die Wirksamkeit dieses Verfahrens hängt jedoch in hohem Maß von der Porengröße bzw. von der Verdichtbarkeit des Deponiekörpers sowie von den spezifischen Eigenschaften des Abfallmaterials ab.

Weiterhin ist ein Verfahren bekannt (DE-C- 42 34 112), bei dem bestehende Mülldeponien durch "Müllstopfen" nachverdichtet werden. Hierbei werden beispielsweise mittels einer Rammeinrichtung oder mittels eines Tiefenrüttlers zusätzliche Hohlräume im bestehenden Deponiekörper geschaffen, in die weiterer Müll hineingestopft werden kann. Dieses bekannte Verfahren ist zwar grundsätzlich auch für fließfähige Abfallstoffe, wie Klärschlämme, geeignet, bringt jedoch in bezug auf derartige Abfallstoffe noch nicht optimale Ergebnisse.

Der Erfindung liegt daher die Aufgabe zugrunde, das Verfahren der gattungsgemäßen Art derart weiterzubilden, daß fließfähige Abfallstoffe unterschiedlicher Konsistenz auf möglichst wirtschaftliche und umweltgerechte Weise innerhalb bestehender Deponien und ohne Vergrößerung des Deponieraums deponiert werden können, indem Maßnahmen ergriffen werden, um die radiale Eindringtiefe zu vergrößern.

Diese Aufgabe wird durch die Erfindung mit dem in Anspruch 1 beschriebenen Verfahren gelöst. Vorteilhafte Ausgestaltungen hiervon sind in den weiteren Ansprüchen angegeben.

Mit Hilfe des erfindungsgemäßen Verfahrens ist es ohne weiteres möglich, Hohlräume und Poren in einem großen Bereich um die eingebrachte Injektionseinrichtung herum mit den fließfähigen Abfallstoffen aufzufüllen, wodurch ein beträchtlicher Gewinn an zusätzlichem Deponieraum erzielt werden kann. Das Einbringen fließfähiger Abfallstoffe, wie Klärschlamm, in den Deponiekörper hat weiterhin den Vorteil, daß damit ein biologisch aktives Medium in den Körper eingebracht wird und die Zersetzung des Mülls beschleunigt werden kann.

Wird eine derartige biologische Aktivierung der Deponien nicht angestrebt, können die fließfähigen Abfallstoffe auch durch Zugabe von hydraulischen oder latent-hydraulischen Bindemitteln (z.B. Braunkohlenflugaschen) derart stabilisiert und verfestigt werden, daß sie sich nach dem Einbringen in der Deponie als verfestigte, aber noch verformbare plastische Masse den Verformungen des Deponiekörpers anpassen.

Vorteilhafterweise erfolgt das Einbringen der fließfähigen Abfallstoffe mittels der Injektionseinrichtung bis zur vorbestimmten Tiefe unter möglichst geringer Verdichtung der umgebenden Müllmassen, da eine Verdichtung in der Umgebung der Injektionseinrichtung das Einpressen der fließfähigen Abfallstoffe in den Deponiekörper erschweren würde.

Zweckmäßigerweise wird die Injektionseinrichtung zunächst bis zur vorbestimmten Tiefe in den Deponiekörper eingebracht und anschließend während des Injizierens der Abfallstoffe oder zwischen Injektionsintervallen in Richtung der Deponieoberfläche hochgezogen. Das Hochziehen der Injektionseinrichtung kann dabei kontinuierlich, diskontinuierlich bzw. im Pilgerschrittverfahren erfolgen.

Das Injizieren der Abfallstoffe in den umgebenden Deponiekörper kann alternativ zur selben Zeit lediglich in einer einzigen Tiefe oder gleichzeitig in verschiedenen Tiefen durchgeführt werden. Zu diesem Zweck weist die Injektionseinrichtung mehrere Austrittsöffnungen auf, die in verschiedenen Höhen der Injektionseinrichtung und/oder über deren Umfang verteilt angeordnet sind.

Ein gleichmäßiges Einpressen der Abfallstoffe im gesamten Umgebungsbereich der Injektionseinrichtung wird erreicht, wenn die Injektionseinrichtung während des Injizierens um ihre Längsachse gedreht wird.

Die fließfähigen Abfallstoffe können auf verschiedene Weise bis zur vorbestimmten Tiefe in den Deponiekörper eingebracht werden. So ist es gemäß einer vorteilhaften Ausführungsform möglich, daß eine Injektionseinrichtung in der Form eines Injektionsrohres von der Oberfläche des Deponiekörpers aus bis zur vorbestimmten Tiefe in den Deponiekörper eingerammt oder eingedrückt wird. Die Abfallstoffe werden in diesem Fall innerhalb des Injektionsrohres bis zur vorbestimmten Tiefe gepumpt und von dort über entsprechende Austrittsöffnungen in den umgebenden Deponiekörper eingepreßt. Bei dieser Art des Einbringens wird der umgebende Boden nur wenig verdichtet, da Rohre mit relativ kleinen Durchmessern, beispielsweise 5 - 13 cm (2 - 5 Zoll), verwendet werden können.

Anstelle eines derartigen Injektionsrammrohrverfahrens kann auch ein Bohrverfahren angewendet werden, wobei vor dem Einbringen einer Injektionseinrichtung in der Form eines Injektionsrohres in den Deponiekörper eine Bohrung abgeteuft und das Injektionsrohr nach dem Bohrvorgang in diese Bohrung eingebracht wird. Hierbei ist es vorteilhaft, wenn ein ggf. das Injektionsrohr umgebender freier Ringraum vor dem Injizieren der Abfallstoffe aufgefüllt und damit abgedichtet wird, um ein Zirkulieren der Abfallstoffe im Ringraum zu unterbinden. Das Verpressen der fließfähigen Abfallstoffe kann wie beim Injektionsrammrohrverfahren während des kontinuierlichen oder diskontinuierlichen Hochziehens des Injektionsrohres erfolgen.

Alternativ hierzu kann die Injektionseinrichtung auch selbst als Bohrvorrichtung ausgestaltet sein. In diesem Fall wird eine Injektionseinrichtung in der Form eines hohlen Bohrgestänges in den Deponiekörper bis zur vorbestimmten Tiefe eingebohrt. Die Abfallstoffe werden anschließend über das Innere des Bohrgestänges zugeführt und in den Deponiekörper injiziert. Alternativ hierzu kann das Bohrgestänge auch eingedreht, eingerüttelt, eingerammt oder eingedrückt werden, wobei dies vorzugsweise derart durchgeführt wird, daß kein Ringraum um das Bohrgestänge herum entsteht.

Eine weitere Möglichkeit, die fließfähigen Abfallstoffe in den Deponiekörper einzubringen, besteht darin, daß eine Injektionseinrichtung in der Form eines Injektionsrohres, das an seinem Außenumfang eine vorzugsweise schraubenartige Wendel aufweist, in den Deponiekörper bis zur vorbestimmten Tiefe eingedreht wird. Das Eindrehen einer derartigen Injektionseinrichtung kann hierbei durch Aufbringen eines Drucks in Vorschubrichtung unterstützt werden.

Bei diesem Bohrverfahren liegt das Deponiegut am Injektionsrohr bzw. in den Schraubengängen an, so daß ein Austreten der Abfallstoffe auf dem kürzesten Weg entlang des Injektionsrohres besonders wirkungsvoll verhindert wird. Während des Injektionsvorganges kann das Schneckenrohr entgegen der Einbohrrichtung drehend hochgezogen werden, wobei ein Vektor aus Zieh- und Drehgeschwindigkeit in Größe des Steigungswinkels der Schnecke günstig ist.

Weiterhin ist es auch möglich, die fließfähigen Abfallstoffe dadurch in den Deponiekörper einzubringen, daß eine Injektionseinrichtung in der Form eines ein Transportrohr für die Abfallstoffe aufweisenden Rüttlers bis zur vorbestimmten Tiefe in den Deponiekörper eingerüttelt wird. Hierbei ist es vorteilhaft, einen Rüttler mit geringer Schwingweite zu benutzen, um den Boden möglichst wenig zu verdichten. Zur Vermeidung einer derartigen Verdichtung kann es auch vorteilhaft sein, das Hochziehen der Injektionseinrichtung in Richtung der Deponieoberfläche ohne Einsatz von Rüttelenergie durchzuführen.

Vorteilhafterweise wird eine Injektionseinrichtung verwendet, die am Außenumfang angeordnete Schneidelemente aufweist, die beim Absenken und/oder Hochziehen der Injektionseinrichtung die umgebenden Bodenmassen aufschneiden und dadurch das Eindringen der flüssigen Abfallstoffe erleichtern. Ein derartiges Aufschneiden der umgebenden Bodenmassen ist insbesondere dann vorteilhaft, wenn Rohre größeren Durchmessers, z.B. Rohre mit einem Durchmesser von 500 - 1500 mm, in den Boden eingerammt werden, um einen entsprechend großen Hohlraum zur Aufnahme des flüssigen Gutes zu schaffen. Die in diesem Fall erfolgende größere Verdichtung der umgebenden Bodenmassen beim Absenken der Injektionseinrichtung wird dann durch derartige Schneidelemente wieder zumindest teilweise kompensiert.

Falls erforderlich, werden die Abfallstoffe vor dem Injizieren in den Deponiekörper aufbereitet, insbesondere durch Zugabe von Additiven, wie Fließmittel oder Verfestigungsmittel, mit denen das Verhalten und die Eigenschaften des Injektionsgutes in der gewünschten Weise beeinflußt werden können.

Trockene Stoffe lassen sich vorteilhafterweise mittels Luft als Fördermedium in den Deponiekörper einbringen, können jedoch auch in einen pumpfähigen flüssigen oder pastösen Zustand überführt werden.

Soweit es sich bei den trockenen Stoffen um körniges sedimentierfreudiges Material handelt, kann durch das mehrmalige Anfahren von Injektionspunkten nach einer Ruhepause damit gerechnet werden, daß die Hohlräume nach Sedimentation und Abfließen des freigewordenen Wassers zur Neuaufnahme geeignet sind.

Die Erfindung wird nachfolgend anhand der Zeichnung beispielsweise näher erläutert. In dieser zeigen:
- Fig. 1: eine schematische Darstellung zur Erläuterung eines Verfahrens bei Verwendung eines in den Deponiekörper einzurammenden oder einzudrückenden Injektionsrohres,
- Fig. 2: schematisch eine alternative Ausführungsform, bei der ein Injektionsrohr in ein Bohrloch abgesenkt wird;
- Fig. 3: schematisch eine weitere Ausführungsform, bei der ein Bohrgestänge zum Injizieren der Abfallstoffe verwendet wird;
- Fig. 4: schematisch eine weitere Ausführungsform, bei der ein Schneckenbohrgerät zum Injizieren der Abfallstoffe verwendet wird,
- Fig. 5: schematisch eine weitere Ausführungsform, bei der ein Tiefenrüttler zum Injizieren der Abfallstoffe verwendet wird, wobei sich der Tiefenrüttler in seiner tiefsten Position befindet,
- Fig. 6: eine Darstellung ähnlich Fig. 5, wobei sich der Tiefenrüttler in einer teilweise angehobenen Position befindet, und
- Fig. 7: schematisch eine Ausführungsform, des erfindungsgemäßen Verfahren bei dem ein einzurammendes oder einzudrückendes Injektionsrohr großen Durchmessers mit Schneidelementen verwendet wird.

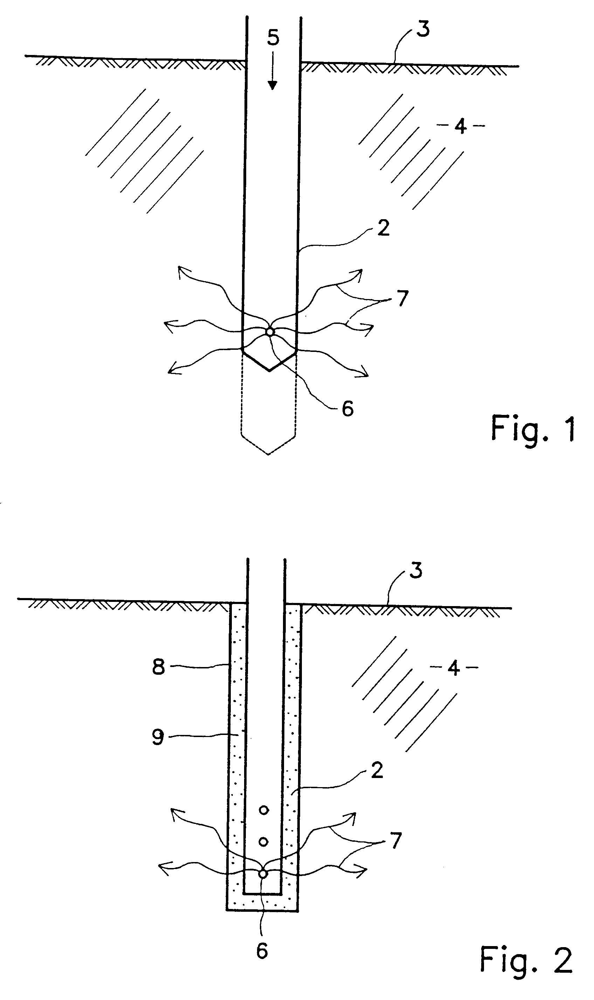

Aus Fig. 1 ist ein Deponiekörper 4 ersichtlich, in den eine Injektionseinrichtung in der Form eines Injektionsrohres 2 in senkrechter Richtung von der Deponieoberfläche 3 aus mittels einer nicht dargestellten Ramm- oder Einpreßvorrichtung bis in eine vorbestimmte, durch gestrichelte Linien dargestellte Tiefe in den Deponiekörper 4 eingeschlagen oder eingedrückt worden ist.

Das Injektionsrohr 2 ist an seiner unteren Stirnseite mit einer kegelförmigen Verschlußkappe versehen, die das Eintreiben des Injektionsrohres 2 in den Deponiekörper 4 erleichtert und gleichzeitig verhindert, daß hierbei Deponiekörpermaterial von unten in das Innere des Injektionsrohres 2 gelangt.

Beim Eintreiben des Injektionsrohres 2 in den Deponiekörper 4 wird der anliegende Müll somit verdrängt. Der hierdurch bewirkte Verdichtungseffekt der anliegenden Müllmassen wird durch die Verwendung relativ dünner Rohre jedoch so gering wie möglich gehalten, um das nachfolgende Injizieren von fließfähigen Abfallstoffen 5, wie Klärschlamm, in Poren und Hohlräume des Deponiekörpers 4 im Umgebungsbereich des Injektionsrohres 2 nicht zu erschweren. Je nach Art und Fließfähigkeit der Abfallstoffe 5 werden zweckmäßigerweise Injektionsrohre mit einem Durchmesser von etwa 5 - 13 cm (2" - 5") verwendet.

Das Injektionsrohr 2 weist in der Nähe seines unteren Endes eine seitliche Austrittsöffnung 6 auf, über welche die im Inneren des Injektionsrohres 2 zugeführten fließfähigen Abfallstoffe 5 seitlich in die Poren und Hohlräume des anliegenden Deponiekörpers 4 eingepreßt werden. Der Verlauf der Abfallstoffe nach dem Verlassen des Injektionsrohres 2 ist symbolisch durch die Pfeile 7 dargestellt.

Die Austrittsöffnung 6 kann derart angeordnet und ausgerichtet sein, daß die Abfallstoffe 5 nicht oder nicht ausschließlich senkrecht zur Längsrichtung des Injektionsrohres 2, d.h. im vorliegenden Fall horizontal, sondern in einem bestimmten Winkel zur Längsachse das Injektionsrohr 2 verlassen.

Weiterhin können auch mehrere Austrittsöffnungen entlang des Injektionsrohres 2 vorhanden sein, die ggf. über dessen Umfang versetzt angeordnet und nacheinander angefahren werden können.

Das Injektionsrohr 2 wird nach dem Erreichen der vorbestimmten oder tatsächlich möglichen Tiefe kontinuierlich oder stufenweise hochgezogen, wobei die fließfähigen Abfallstoffe 5 im Innern des Injektionsrohres 2 unter erhöhten Druck gesetzt und über die Austrittsöffnung 6 in die Poren und Hohlräume des Deponiekörpers 4 eingepreßt werden. Druck und Fließmenge werden hierbei reguliert und an die jeweiligen Verhältnisse optimal angepaßt.

Beim Hochziehen des Injektionsrohres 2 unter gleichzeitigem Verpressen der Abfallstoffe 5 werden alle vorhandenen Poren und Hohlräume in einem weiten Umgebungsbereich des Injektionsrohres 2 und der vom Injektionsrohr hinterlassene Hohlraum im Deponiekörper 4 mit Abfallstoffen bestmöglich aufgefüllt.

Bei dem alternativen Verfahren gemäß Fig. 2 wird zunächst eine senkrechte Bohrung 8 in den Deponiekörper 4 abgeteuft. Anschließend wird das Injektionsrohr 2 in die Bohrung 8 eingestellt und der bestehende Ringraum 9 zwischen Injektionsrohr 2 und Deponiekörper 4 mit Müll aufgefüllt, um ein Zirkulieren der ausgepreßten Abfallstoffe 5 im Ringraum 9 zu unterbinden.

Das Verpressen der fließfähigen Abfallstoffe 5 erfolgt wie bei dem im Zusammenhang mit Fig. 1 beschriebenen Injektionsrammrohrverfahren.

Wie aus Fig. 2 weiterhin ersichtlich, weist das Injektionsrohr 2 drei übereinander angeordnete Austrittsöffnungen 6 auf, über die die zu verpressenden Abfallstoffe 5 gleichzeitig abgegeben werden. Alternativ ist es auch möglich, die Austrittsöffnungen 6 über entsprechende Steuer- oder Verschlußeinrichtungen nacheinander zu aktivieren. Die Austrittsöffnungen 6 können auch über die gesamte Länge des Injektionsrohres 2 abschnittsweise verteilt sein, so daß erforderlichenfalls mittels Packer einzelne Gruppen beaufschlagt werden können.

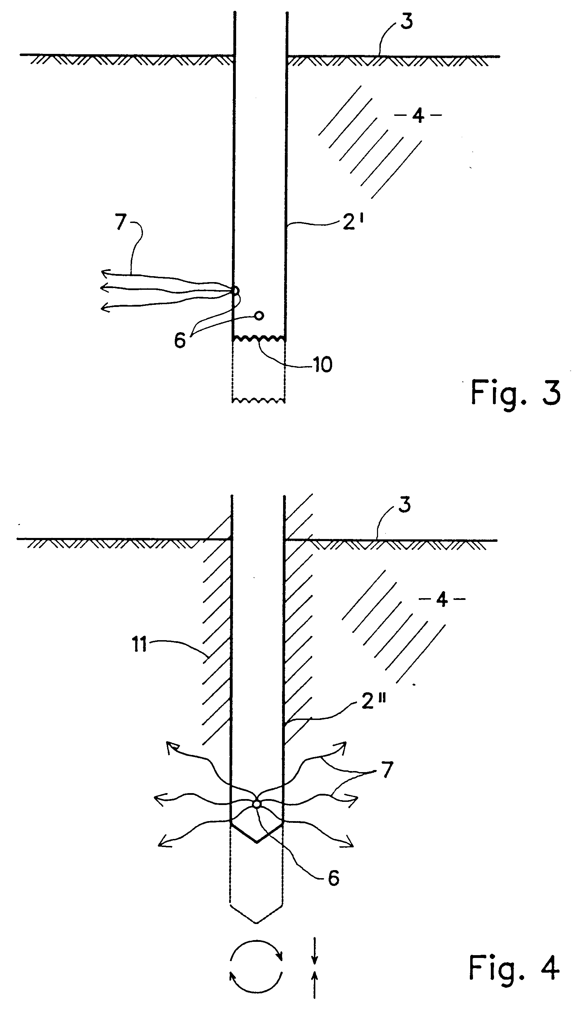

Bei der alternativen Ausführungsform gemäß Fig. 3 wird ein Düsenstrahlverfahren eingesetzt, bei dem als Injektionseinrichtung ein Bohrgestänge 2' verwendet wird. Dieses Bohrgestänge 2' trägt an seinem unteren Ende eine Bohrkrone 10. Das Bohrgestänge 2' kann in Abwandlung zu dem bekannten "Soilcrete"-Verfahren der Anmelderin nicht nur in den Deponiekörper 4 eingebohrt, sondern auch derart eingedreht, eingerüttelt, eingerammt oder eingedrückt werden, daß kein freier Ringraum zwischen Bohrgestänge 2' und Deponiekörper 4 entsteht.

Nach Erreichen der gestrichelt eingezeichneten Endtiefe werden die fließfähigen Abfallstoffe 5 über das Bohrgestänge 2' verpumpt und das Bohrgestänge 2' drehend gezogen. Der Durchmesser der versetzt angeordneten Austrittsöffnungen 6 ist an die Art und Fließfähigkeit der auszutretenden Abfallstoffe 5 angepaßt. Fließmenge und Austrittsgeschwindigkeit bzw. der Druck der auszupressenden Abfallstoffe 5 werden entsprechend geregelt.

Eine weitere Ausführungsform ist aus Fig. 4 ersichtlich, bei der ein Injektionsrohr 2'' im Schneckenbohrverfahren in den Deponiekörper 4 eingedreht wird. Zu diesem Zweck weist das Injektionsrohr 2'' am Außenumfang eine Wendel 11 in der Art eines Schraubengewindes auf, die sich über die gesamte Länge des Injektionsrohres 2'' erstrecken, lediglich in Teilabschnitten auf diesem vorgesehen sein oder aus nur wenigen Gängen bestehen kann.

Mit Hilfe der Wendel 11 wird das Injektionsrohr 2'' - ggf. unter gleichzeitigem Aufbringen eines entsprechenden Axialdrucks - in den Deponiekörper 4 bis zur vorbestimmten Tiefe eingedreht. Nach Erreichen der vorbestimmten Tiefe werden die fließfähigen Abfallstoffe 5 über die Austrittsöffnungen 6 ausgepumpt.

Bei diesem Bohrverfahren liegt das Deponiegut am Injektionsrohr 2'' bzw. an den Schraubengängen an, so daß ein Austreten der eingepumpten Abfallstoffe 5 auf dem kürzesten Weg entlang des Injektionsrohres 2'' besonders gut verhindert wird.

Während des Injektionsvorganges wird das Injektionsrohr 2'' entgegen der Eindrehrichtung drehend gezogen, wobei der Vektor aus Zieh- und Drehgeschwindigkeit derart gewählt wird, daß er der Größe des Steigungswinkels der Schnecke entspricht.

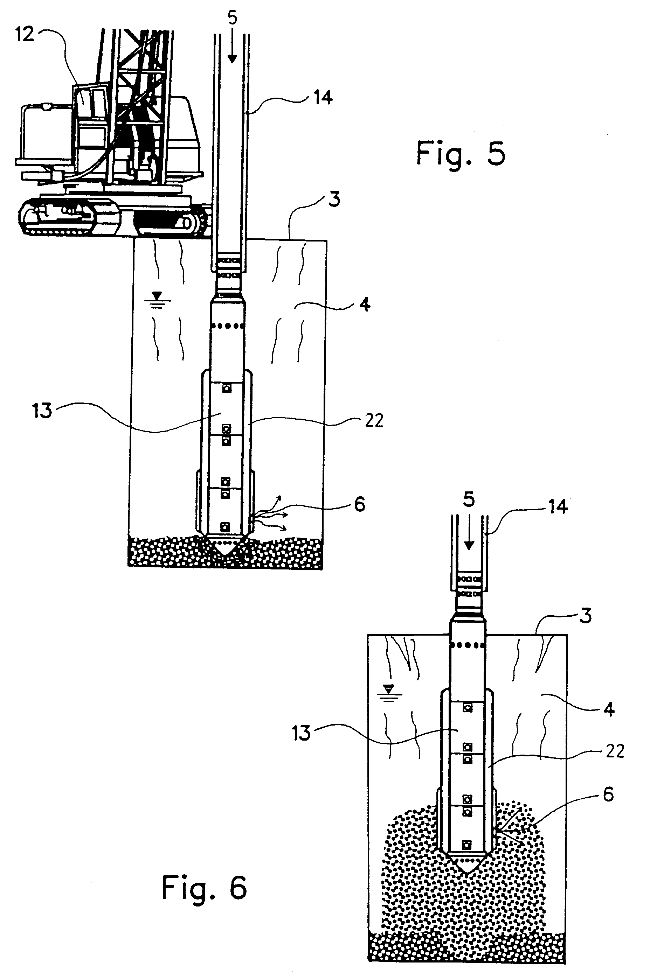

Aus Fig. 5 und 6 ist eine weitere Ausführungsform entnehmbar, bei der in den Deponiekörper 4 von dessen Oberfläche 3 her ein an einem Tragegerät 12 geführter Tiefenrüttler 13 eingebracht und bis zur geplanten Tiefe abgesenkt wird. Der Tiefenrüttler 13 weist eine an sich bekannte Ausbildung auf. Der Rüttler 13 ist je nach Bedarf durch Aufsatzrohre 14 verlängert.

Um den Boden möglichst wenig zu verdichten, wird ein Rüttler mit geringer Schwingweite verwendet.

Die flüssigen Abfallstoffe werden innerhalb der Aufsatzrohre 14 eingeleitet, über eine Kupplung geführt und oberhalb des Rüttlermotors wieder nach außen in außenliegende Rohre 22 und von dort zu den Austrittsöffnungen 6 geleitet.

Weiterhin besteht auch die alternative Möglichkeit, ein Rohr außerhalb der Aufsatzrohre 14 und des Rüttlers 13 zum Transport der flüssigen Abfallstoffe vorzusehen.

Wenn der Rüttler 13 die vorbestimmte Tiefe erreicht hat, erfolgt das Ziehen des Rüttlers 13 in der aus Fig. 6 ersichtlichen Weise. Hierbei werden gleichzeitig die fließfähigen Abfallstoffe 5 über die Öffnung 6 ausgepumpt.

Zur Vermeidung von weiterem Eintrag von Rüttlerenergie kann der Rüttlermotor beim Ziehvorgang abgestellt werden.

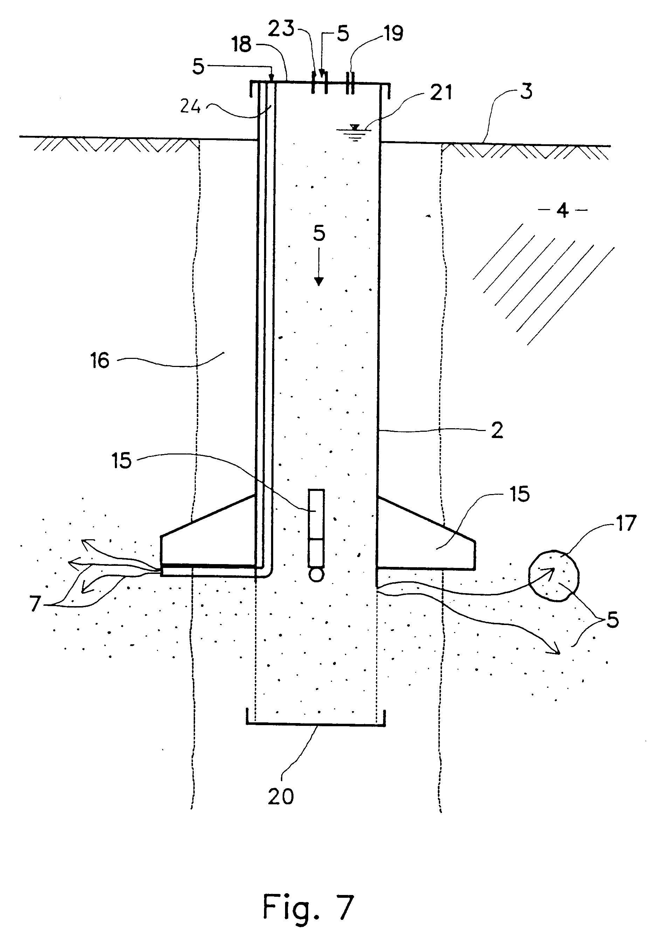

Das erfindungsgemäße Verfahren ist in Fig. 7 dargestellt. Hierbei wird ein mit einem Rammschuh oder Rohrverschluß 20 verschlossenes Injektionsrohr 2 größeren Durchmessers, beispielsweise mit einem Durchmesser von 500 - 1500 mm, in den Deponiekörper 4 eingerammt, um einen entsprechend großen Hohlraum im Deponiekörper 4 zur Aufnahme der fließfähigen, durch Punkte dargestellten Abfallstoffe 5 zu schaffen.

Nach Erreichen der Endtiefe wird das Injektionsrohr 2 gefüllt und anschließend gezogen. Um hierbei zu erreichen, daß die fließfähigen Abfallstoffe 5 durch entsprechende Austrittsöffnungen am Rohraußenmantel möglichst weit in die Umgebung eindringen, wird der Inhalt des Injektionsrohres 2 unter Druck gesetzt. Hierzu wird auf das Injektionsrohr 2 eine Rammhaube bzw. Preßkappe 18 aufgesetzt und der Rohrinhalt entweder mit weiterem Abfallstoff, mit Druckluft oder mit Wasser unter Druck gesetzt. Aus Sicherheitsgründen kann die Anwendung von Wasser derjenigen von Druckluft vorgezogen werden. Um die weiteren Abfallstoffe 5, Druckluft bzw. Wasser durch die Rammhaube bzw. Preßkappe 18 hindurch in das Innere des Injektionsrohres 2 einleiten zu können, ist in der Rammhaube bzw. Preßkappe 18 ein Luft- bzw. Wasserdurchlaß 19 bzw. ein Anschluß 23 für die weiteren Abfallstoffe vorgesehen. Durch die Druckbeaufschlagung füllt sich die Umgebung des Injektionsrohres 2 innerhalb und außerhalb eines verdichteten Bereichs 16 mit den fließfähigen Abfallstoffen, was durch Punkte schematisch dargestellt ist.

Der Spiegel 21 der Abfallstoffe 5 innerhalb des Injektionsrohres 2 befindet sich in der Nähe der Deponieoberfläche 3. Bei hohem Abströmen in die Umgebung wird der Rohrinhalt über den Anschluß 23 in der Rammhaube bzw. Preßkappe 18 entsprechend nachgefüllt.

Am Außenumfang des Injektionsrohres 2 können radial gerichtete Schneidelemente 15 von geeigneter Wandstärke, beispielsweise 10 - 15 mm, angebracht sein. Mit diesen Schneidelementen 15 kann beim Ziehen des Injektionsrohres 2 die beim Einrammen verdrängte und verdichtete Müllmasse im Bereich 16, der dem Injektionsrohr 2 benachbart ist, aufgeschnitten werden. Mittels der Schneidelemente 15 können auch Poren und Hohlräume 17 außerhalb des verdichteten Bereichs 16 angeschnitten werden.

Alternativ oder ergänzend zu dem anhand der Fig. 7 beschriebenen Verfahren kann ein Injektionsrohr 24 für die flüssigen Abfallstoffe 5 vorgesehen sein, das innerhalb des Injektionsrohres 2 von oben bis zur Tiefe der Schneidelemente 15 geführt ist und unterhalb der Schneidelemente 15 durch den Außenmantel hindurch bis zum Ende der Schneidelemente 15 oder bis zu einer beliebigen Stelle zwischen Rohraußenmantel und dem Ende der Schneidelemente 15 geführt ist. Mit Hilfe eines derartigen Injektionsrohrs 24 kann die Eindringweite der fließfähigen Abfallstoffe 5 in den umgebenden Deponiekörper 4 erweitert werden.

Die in Fig. 7 dargestellten Schwerter oder Schneidelemente 15 können ohne weiteres auch bei den Injektionsrohren bzw. bei dem Rüttler der Fig. 1, 3, 5 und 6 angebracht werden. Voraussetzung ist, daß die entsprechende Einrichtung nicht drehend in oder aus dem Boden bewegt wird. Insbesondere ist es auch möglich, einen Tiefenrüttler mit derartigen Schneidelementen 15 auszustatten, wobei radial zur Rüttlerlängsachse gerichtete Düsen an den Schwertern vorgesehen sind, um den beim Ziehen des Rüttlers freiwerdenden Raum unterhalb der Schwerter und des Rüttlers mit fließfähigen Abfallstoffen zu füllen.

## Patentansprüche

1. Verfahren zur Gewinnung von Deponieraum für fließfähige Abfallstoffe, insbesondere von Klärschlamm, durch bereichsweise erfolgendes Erhöhen der Dichte des Deponiekörpers einer Mülldeponie, wobei die fließfähigen Abfallstoffe mittels einer Injektionseinrichtung bis zu einer vorbestimmten Tiefe in den Deponiekörper eingebracht und von dort unter erhöhtem Druck in Hohlräume und Poren des Deponiekörpers sowie in den durch die Injektionseinrichtung geschaffenen Freiraum innerhalb des Deponiekörpers injiziert werden,
dadurch gekennzeichnet, daß
das Injizieren der fließfähigen Abfallstoffe (5) zum Erweitern des Eindringradius in den Deponiekörper (4) durch eine oder mehrere seitliche Austrittsöffnungen (7) erfolgt, die in der Außenwand der injektionseinrichtung (2) angebracht sowie in radialem Abstand hierzu am Ende eines von der Außenwand seitlich in den Deponiekörper (4) ragenden Injektionsrohres (24) vorgesehen sind.

2. Verfahren nach Anspruch 1, dadurch gekennzeichnet, daß oberhalb der Austrittsöffnungen (7) radial nach außen gerichtete Schneidelemente (15) auf der Injektionseinrichtung (2) angebracht sind.

3. Verfahren nach Anspruch 2, dadurch gekennzeichnet, daß die Schneidelemente (15) die seitlichen Austrittsöffnungen (7) überragen.

## Claims

1. Method of obtaining tipping space for free-flowing waste materials, in particular for sewage sludge, by the raising by individual areas of the density of the tip body of a refuse tip, in which the free-flowing waste materials are introduced into the tip body by means of an injection device to a predetermined depth and from there are injected under increased pressure into cavities and pores of the tip body and into the free space within the tip body created by the injection device,
characterised in that
the injecting of the free-flowing waste materials (5) takes place, in order to extend the radius of penetration into the tip body (4), through one or more lateral outlet openings (7) which are accommodated in the outer wall of the injection device (2) and are also provided, spaced radially thereto, at the end of an injection pipe (24) projecting from the outer wall laterally into the tip body (4).

2. Method according to claim 1, characterised in that above the outlet openings (7) cutting elements (15) directed radially outwards are accommodated on the injection device (2).

3. Method according to claim 2, characterised in that the cutting elements (15) project beyond the lateral outlet openings (7).

## Revendications

1. Procédé pour gagner de la place dans une décharge pour des déchets fluides, en particulier pour des boues d'épuration, en augmentant par zones la densité de la masse de décharge d'une décharge de déchets, dans lequel les déchets fluides sont introduits au moyen d'un dispositif d'injection jusqu'à une profondeur prédéterminée dans la masse de décharge, et sont injectés depuis cet endroit sous pression accrue dans des cavités et des pores de la masse de décharge, ainsi que dans l'espace libre créé par le dispositif d'injection à l'intérieur de la masse de décharge,
caractérisé en ce que
l'injection des déchets fluides (5) a lieu, pour augmenter le rayon de pénétration dans la masse de décharge (4), via une ou plusieurs ouvertures de sortie latérales (7) qui sont ménagées dans la paroi extérieure du dispositif d'injection (2), ainsi qu'à l'extrémité, à distance radiale de cette paroi, d'un tube d'injection (25) qui dépasse de la paroi extérieure latéralement jusque dans la masse de décharge (4).

2. Procédé selon la revendication 1, caractérisé en ce que des éléments de coupe (15) dirigés radialement vers l'extérieur sont montés sur le dispositif d'injection (2) au-dessus des ouvertures de sortie (7).

3. Procédé selon la revendication 2, caractérisé en ce que les éléments de coupe (15) dépassent par rapport aux ouvertures de sortie latérales (7).
